Europäisches Patentamt

European Patent Office

Office européen des brevets

(11) Publication number: **0 382 410**
**A2**

## (12) EUROPEAN PATENT APPLICATION

(21) Application number: 90301071.8

(22) Date of filing: 01.02.90

(51) Int. Cl.5: **G09C 1/04, G09B 1/10, G09B 1/28**

(30) Priority: 07.02.89 GB 8902639

(43) Date of publication of application:
**16.08.90 Bulletin 90/33**

(84) Designated Contracting States:
**AT BE CH DE DK ES FR GB GR IT LI LU NL SE**

(71) Applicant: **Burkill, Vance**
**81 Birchfield Road**
**Coundon, Coventry CV6 2BB(GB)**

(72) Inventor: **Burkill, Vance**
**81 Birchfield Road**
**Coundon, Coventry CV6 2BB(GB)**

(74) Representative: **Healy, Cecilia Patricia et al**
**E.N. Lewis & Taylor 5 The Quadrant**
**Coventry CV1 2EL(GB)**

(54) Memory aid.

(57) A memory aid for enabling a user safely to store alphanumerical sequences such as PIN numbers for bank cash dispensers, comprises a plurality of elements (11) each carrying a plurality of alphanumerical characters, the elements being assembled together on a core (10) in a non-rotational manner, the user placing the characters of the sequence to be remembered in a chosen pattern among the other characters so that only the user can read the sequence.

FIG.1.

# MEMORY AID

This invention relates to a memory aid.

It is often essential to be able to remember for use some combination of numbers or other alphanumeric indicia which ought not to be written down for security reasons. For example, bank cash dispensers are operated by the use of a magnetically coded card and a personal identification number (PIN number), both of which must be given to the machine before cash can be dispensed. If a thief tries to use the card, this will not succeed without the correct PIN number. However, many people find it so difficult to remember the PIN number that these are often written down, making it possible for the thief to use the card for cash withdrawal.

Similarly, computers used on-line can usually only be operated if the correct identity password is known. Many users choose excessively simple words for passwords, for instance their own names, which can easily be guessed, or memorized on sight by someone having momentary access to a computer room. More effective, meaningless combinations of letters are not often used, because of the difficulty of remembering them accurately.

It is an object of the invention to provide a memory aid which is capable of enabling a user to store a series of alphanumeric symbols in a form which can be read easily, but only by the user.

According to the present invention, there is provided a memory aid including a plurality of elements each having a plurality of alphanumeric symbols thereon, the elements being adapted to be assembled together in an order chosen by the user such that selected individual symbols form a chosen pattern identifiable only by the user.

Thus, the user can preset the elements to a chosen position in which he can read off the selected symbols but, without knowing the pattern in which the symbols have been positioned, an outsider cannot select the correct ones from the plurality of symbols available.

The symbols may be numerical digits, in which case the complete range of ten such digits may readily be provided identically on each element. The symbols may alternatively or additionally be aphabet letters. Not all letters and/or digits need be provided on each element. In this case different elements may carry different groups of letters or digits.

The elements may be annular. They may be provided with internal keying formations. In this case the elements may be mounted on a polygonal or splined core, to enable them to be retained in chosen positions such that the selected symbols form a pattern known to the user only.

Alternatively or additionally, the elements may be provided with a plurality of facets, related to the number of symbols they carry.

A memory aid embodying the invention will now be described in more detail by way of example only with reference to the accompanying drawings, in which:-

FIGURE 1 is an exploded perspective view of a partly assembled memory aid;

FIGURE 2 is an enlarged plan sectional view on the line 2-2 of Figure 1;

FIGURE 3 is a diagrammatic illustration of some patterns of selected symbols which can be made up by a user to assist in memorizing a series of numbers.

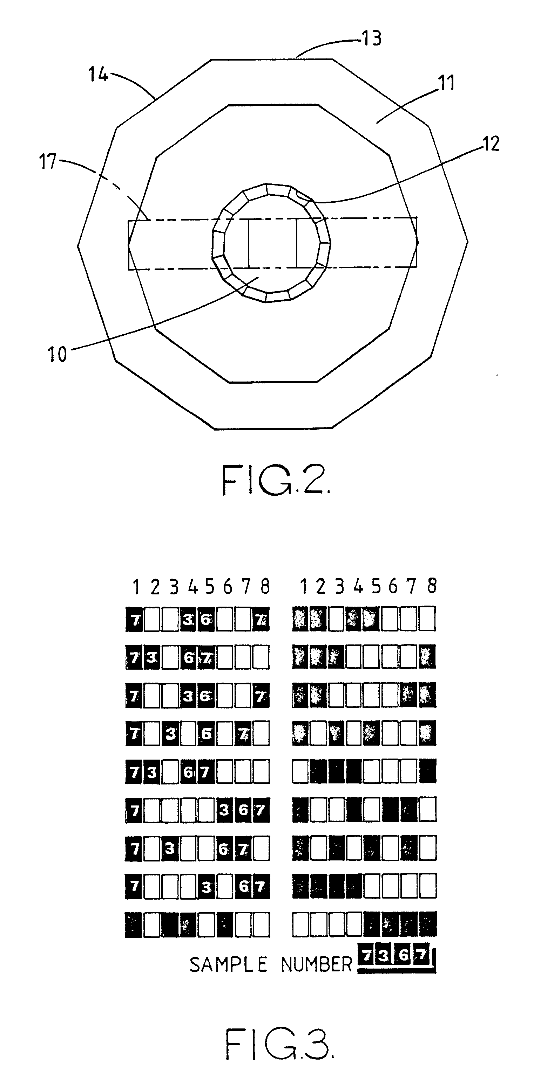

Referring to Figure 3 of the drawings, there will be seen eighteen different arrays in which the digits of a chosen number, 7367 in this case, are displayed in a chosen pattern in an array of spaces. If the remaining spaces of one of the arrays shown were filled with digits selected at random, great difficulty would be found in trying to guess the chosen number hidden in the array, without knowing the pattern in which the digits were hidden.

By extending this principle, the present invention provides a memory aid in which not one but a plurality of such arrays is provided. Each array contains a plurality of digits but only one of the arrays contains the chosen number. Which array is concerned is not known except to the user. The pattern in which the chosen number is displayed is also not known to anyone but the user. This means that an enormous number of possible combinations of numbers are displayed, making it impossible to guess the chosen number. For ten arrays concealing four digits, there are of the order of ten thousand possible permutations.

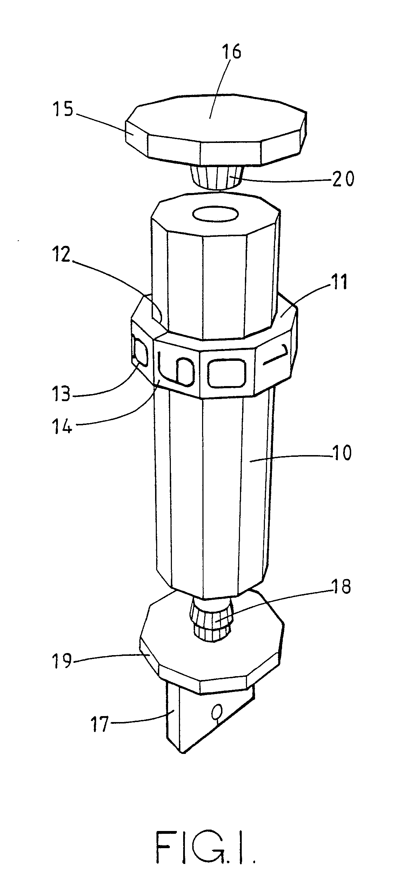

Various ways may be devised to use this principle to provide a memory aid. In the example shown in Figures 1 and 2, a decagonal core 10 slidably receives a number of annular elements 11, only one of which is shown. Each element has a central decagonal opening 12, cooperable with the core 10. The elements may have a circular outer profile or, as shown, may be decagonal, having ten facets 13, 14, etc. Each element carries all ten digits from 0 to 9 around its circumference. For a circular element, these are evenly positioned, while for the decagonal element shown, each facet carries a single digit.

The elements 11 are retained on the decagonal core 10 by end members. One of these is shown at 15 as including a decagonal part with a blank face 16. The decagonal part could, however, be an element similar to the elements 11 but having the blanked off face 16. This face 16 may carry decorative material such as a monogram or company logo. The end member 15 has a snap engagement 20 or is otherwise fixedly secured to the end of the core, either by the user in assembling the memory aid or in production. It will be appreciated that, where this end member forms one of the elements of the memory aid, the digits on this particular element may be fixed relative to the core without reducing the choice of combinations of numbers possible.

Each further element 11 is then threaded onto the core 10 in such a way that one column or array of digits contains, in a pattern selected by the user, the chosen number. This column can be identified by reference to the digit displayed on the end member 15, which itself may be part of the chosen number or not. To assist the user, the different facets of the decagonal end member 15 (or of all the decagonal elements) may be coloured differently.

When the chosen number has been coded into the memory aid in a particular pattern in a particular column or array, the whole assembly is fixed together so that the elements cannot be rotated out of position. In the example illustrated, an end member 17 is provided to complete the assembly by snap engagement of a projection 18 into a corresponding central hole (not shown) of the core 10. The end member may again include a decagonal portion 19, which may itself carry digits from 0 to 9, and may display part of the chosen number if the user so wishes. The end member may be formed so that the memory aid also provides an article of practical utility such as a key fob. By the use of a more decorative material, such as precious metal for the article, it can be used as an article of jewellery such as a pendant.

As an alternative to the provision of a decagonal core, the core could be splined, with cooperable internal formations provided inside the elements to be mounted on it. As a further alternative, a blade-like core could be an interference fit between opposed pairs of flat internal faces of the elements, each of which would be provided with an internal decagonal opening, or between internal splines of the elements.

Although the illustrated embodiment shows the elements as carrying numerical digits, the same principle can be extended to alphabet letters or mixtures of letters and digits. The size of the memory aid can be increased or decreased in both length and diameter or for example may comprise concentric discs or rings of different diameters. Where the elements are constant cross-section decagons, the elements may be retained within a transparent tube cooperating with the facets to retain the elements in the chosen positions.

## Claims

1. A memory aid characaterised in that it includes a plurality of elements (11) each having a plurality of alphanumeric symbols thereon, the elements (11) being adapted to be assembled together in an order chosen by the user such that selected individual symbols form a chosen pattern identifiable only by the user.

2. A memory aid according to claim 1 further characterised in that the elements (11) carry symbols comprising numerical digits.

3. A memory aid according to claim 2 further characterised in that each element (11) carries the complete range of ten such digits.

4. A memory aid according to claim 1 further characterised in that the elements (11) carry symbols comprising aphabet letters.

5. A memory aid according to claim 1 further characterised in that different elements (11) carry different groups of letters or digits.

6. A memory aid according to any preceding claim further characterised in that the elements are annular.

7. A memory aid according to claim 6 further characterised in that the elements are provided with internal keying formations.

8. A memory aid according to claim 7 further characterised in that the elements are mounted on a core having external keying formations co-operative with the internal keying formation of the elements to enable them to be retained in chosen positions such that the selected symbols form a pattern known to the user.

9. A memory aid according to any preceding claim further characterised in that the elements are provided with a plurality of external facets, related to the number of symbols they carry.

10. A memory aid according to claim 9 further characterised in that the elements are contained within a transparent tubular housing adapted to retain the elements in a predetermined rotational position such that the selected symbols form a pattern known to the user.

16

15

20

12

11

13

14

10

18

19

17

# FIG.I.

FIG.2.

SAMPLE NUMBER

FIG.3.